# EUROPEAN PATENT SPECIFICATION

(11) **EP 4 115 440 B1**
(45) Date of publication and mention of the grant of the patent: **28.02.2024**
(21) Application number: 21708679.2
(22) Date of filing: 04.03.2021
(51) Int. Cl.: H01J 49/24, H01J 49/00, B32B 1/08, B32B 5/02, B32B 7/03, B32B 9/00, B32B 9/04, B32B 15/20, B32B 5/26, H01J 5/08

(54) **INSTRUMENT COMPRISING A VACUUM CHAMBER**
GERÄT MIT VAKUUMKAMMER
INSTRUMENT COMPORTANT UNE CHAMBRE À VIDE

(30) Priority: 05.03.2020 EP 20161075
(43) Date of publication of application: 11.01.2023
(73) Proprietor: Smart Sensors Holdings B.V., 6229 GS Maastricht (NL); CeraCarbon B.V., 6171 GE Stein (NL)
(72) Inventor: SYED, Sarfarazuddin Ahmed Hashmi, 6229 GS Maastricht (NL); COUMANS, Roeland, 6171 GE Stein (NL)
(74) Representative: IPecunia
(86) International application number: PCT/EP2021/055467
(87) International publication number: WO 2021/175994

(56) References cited:
- US-A1- 2012 068 064
- US-A1- 2018 141 310

## Description

### FIELD OF THE INVENTION

The present invention relates to an instrument that comprises a vacuum chamber comprising an interior space for containing depressurized fluid, and a mechanism for depressurizing fluid in the interior space of the vacuum chamber.

### BACKGROUND OF THE INVENTION

Generally, analytical instruments such as mass spectrometers depend on an analytical technique including detecting compounds of interest such as drugs, explosives, etc. based on their mass-to-charge ratio (molecular mass). Key components in such kind of instruments are a vacuum chamber, an ion source, mass spectrometer electrodes, and an ion detector. A controlled leak is provided at the inlet of the vacuum chamber to introduce a sample to the vacuum chamber. The sample is ionized by the ion source that is housed in the vacuum chamber and ions travel in the vacuum chamber under the influence of electric fields generated by mass spectrometer electrodes. Said sample ions are separated based on their mass to charge ratio and are detected at the ion detector.

A mass spectrum is usually created wherein the horizontal axis represents the mass and wherein the vertical axis represents the signal intensity/current. Vacuum is needed for the mass spectrometer operation so that a chance that the sample ions collide with neutral (air) molecules and with each other is minimized.

Usually, vacuum chambers which are made of high-grade stainless steel are widely in use and provide excellent vacuum characteristics. However, in the case of the mass spectrometer with all its components, this is at the cost of high weight. Low weight metals, such as aluminum, are occasionally in use, but the main problem of many parts made of aluminum is a low wear resistance. In that way, said parts may become susceptible to deformations with time. This will result in leakage problems within the vacuum chamber, especially in connection flanges at which the vacuum chamber is connected to the other components of the analytical instrument. Any leakage in the vacuum chamber will affect analysis and/or measurements of the analytical instrument.

In the past there have been several attempts to use carbon composites in the vacuum chamber. However, it was reported that the composite vacuum chambers were very fragile in those cases. Also, it is impossible to achieve a deep vacuum, since the carbon fiber composites start to release its resin components which will interfere with the measurement of the sample.

US 2012/068064 A1 describes a time-of-flight mass spectrometer instrument, wherein carbon fiber reinforced thermosetting plastic is used as the material for the flight-tube. The tube is made electroconductive by providing a coating treatment, including vapor deposition of aluminum.

### SUMMARY OF THE INVENTION

It is an objective of the present invention to design a vacuum chamber so as to be suitable for enabling an improved and lightweight portable structure of an instrument including the vacuum chamber, and to have improved resistance and improved durability to interior pressures well below ambient pressure.

Aspects of the present invention are set out in the accompanying independent and dependent claims. Features from the dependent claims may be combined with features from the independent claim as appropriate and not merely as explicitly set out in the claims.

At least the abovementioned objective is achieved by an instrument comprising:
- a vacuum chamber comprising an interior space for containing depressurized fluid, and
- a mechanism for depressurizing fluid in the interior space of the vacuum chamber,
wherein a wall of the vacuum chamber delimiting at least a portion of the interior space includes:
- a layer of carbon fiber reinforced thermoset having a thickness in a range of 1-10 mm,
- a first layer of ceramic material having a thickness in a range of 40-60 µm,
- a layer of aluminum having a thickness in a range of 0.5-10 mm, and
- a second layer of ceramic material having a thickness in a range of 40-60 µm,
wherein the first layer of ceramic material is positioned between the layer of carbon fiber reinforced thermoset and the layer of aluminum, wherein the layer of aluminum is positioned between the first layer of ceramic material and the second layer of ceramic material, and wherein the second layer of ceramic material is positioned most to a side of an interior surface of the wall of the vacuum chamber.

Carbon fiber reinforced thermoset materials are widely used in aircrafts for various reasons including high moldability. The material and the lamination and orientation in the fiber direction result in a coefficient of linear expansion of the carbon fiber reinforced thermoset material being less than that of metals (less than 1/170 of conventional stainless steel and less than one-fifth of Invar). In that way, the layer of carbon fiber reinforced thermoset prevents the wall of the vacuum chamber from being deformed without the use of any temperature adjustment.

Carbon fibers may be positioned in specific patterns or can be relatively short and randomly dispersed. In the case of long fibers being positioned in specific patterns, they can be aligned in a single direction or positioned in patterns designed to give two or three dimensional strength to the fiber reinforced thermoset. For example, the carbon fibers may be formed as a unidirectional sheet. These sheets may be layered onto each other in a quasi-isotropic layup, e.g. 0°, +60° or -60° relative to each other. Additionally, the carbon fibers may be formed as a bidirectional woven sheet. The mechanical properties of the carbon fiber reinforced thermoset may be tailored to the specific requirements of the vacuum chamber.

The carbon fiber reinforced thermoset material is strong enough to be used in aircrafts against any impacts. In terms of mechanical strength related to bending strength, its Young's modulus is approximately 1.4-fold of that of stainless steel. Its specific gravity is approximately one-fifth of that of stainless steel. Moreover, the carbon fiber reinforced thermoset material provides high vibration damping properties as compared to metals.

According to the invention, in the wall of the vacuum chamber delimiting at least a portion of the interior space of the vacuum chamber, the first layer of the ceramic material is arranged between the layer of carbon fiber reinforced thermoset and the layer of aluminum. The first layer of the ceramic material provides an adhesive bound between the layer of carbon fiber reinforced thermoset and the layer of aluminum. The layer of aluminum also guarantees the gas impermeability of the wall of the vacuum chamber.

Operation of the vacuum chamber may involve conditions where a high voltage of ± several kV is applied. In that case, it is most practical if the wall of the vacuum chamber includes an electroconductive material which is durable in the context of the depressurized interior space of the vacuum chamber. The second layer of the ceramic material is arranged on the layer of aluminum and is positioned most to a side of an interior surface of the wall of the vacuum chamber. In that way, the second layer of the ceramic layer may allow the layer aluminum to be durable and to not be deteriorated by pressure effects and high voltage effects.

The second layer of the ceramic material has a function as an electrical insulator which provides high wear resistance to the wall of the vacuum chamber. The second layer of the ceramic material is subjected to a pressure following from the presence of a depressurized fluid at the side of the interior surface of the wall of the vacuum chamber. In that way, the second layer of the ceramic material provides high stiffness, low porosity, poor conductivity, chemical resistance and low ductility in the depressurized environment.

The thickness of the second layer of ceramic material is in a range of 40-60 µm. In the case of the thickness being under 40 µm, there is a risk that the second layer of the ceramic material includes some pores and holes that may result in a chemical reaction between the layer of aluminum and the depressurized interior of the vacuum chamber. In the case of the thickness being above 60 µm, it may happen that air that is trapped in the second layer of ceramic material is released to the depressurized interior and may affect a predetermined pressure to be realized in the vacuum chamber.

In an embodiment of the instrument according to the invention, in the wall of the vacuum chamber, the layer of carbon fiber reinforced thermoset is bound to the first layer of ceramic material, wherein the layer of aluminum is bound to the first layer of ceramic material and the second layer of ceramic material.

The layer of the carbon fiber reinforced thermoset is bound on the layer of aluminum on which the first layer of ceramic is bound. One of the advantages of the invention is a possibility to bond the first layer of the ceramic material with the layer of carbon fiber reinforced thermoset and the layer of aluminum under moderate temperatures. This results in a very strong bonding to aluminum and/or carbon fiber without destroying the thermoset resin.

The second layer of ceramic material can be bound to the layer of aluminum such that porosity on the attachment between the second layer of the ceramic material and the layer of aluminum is prevented.

In an embodiment of the instrument, in the wall of the vacuum chamber, the layer of carbon fiber reinforced thermoset has a thickness in a range of 1-2 mm.

In an embodiment of the instrument, in the wall of the vacuum chamber, the layer of aluminum has a thickness in a range of 0.5-3 mm.

In an embodiment of the instrument, in the wall of the vacuum chamber, the layer of aluminum has a thickness in a range of 1-2 mm.

In an embodiment of the instrument, the mechanism for depressurizing the fluid is configured to reduce the pressure of the fluid in the interior space of the vacuum chamber to a pressure in a range of 10⁻¹ mbar (10 Pa) and 10⁻⁹ mbar (10⁻⁷ Pa).

In an embodiment of the instrument, the mechanism for depressurizing the fluid is configured to reduce the pressure of the fluid in the interior space of the vacuum chamber to a pressure in a range of 10⁻³ mbar (10⁻¹ Pa) and 10⁻⁸ mbar (10⁻⁶ Pa).

In an embodiment of the instrument, in the wall of the vacuum chamber, the ceramic material of the second layer of ceramic material has a hardness according to Vickers (HV) of at least 750.

In an embodiment of the instrument, at the side of the wall of the vacuum chamber other than the side where the layer of aluminum is present, the second layer of ceramic material is covered by a coating. In an embodiment of the instrument, the coating is selected from a group that includes a Teflon^{®} coating, gold coating, copper, titanium and a diamond-like-carbon (DLC) coating.

The second layer of the ceramic material may be treated, for example, by coating the second layer of the ceramic material. Coatings may be applied to a side of the second layer of the ceramic material which is positioned most to the side of the interior surface of the wall of the vacuum chamber for reducing friction or increasing friction. The coatings which are suitable to reduce friction may be selected from a group that includes a Teflon^{®} coating or a diamond-like-carbon (DLC) coating. The coatings which are suitable to increase friction may be a thermoplastic coating.

In an embodiment of the instrument, in the wall of the vacuum chamber, the ceramic material of the second layer of ceramic material is material prepared by plasma electrolytic oxidation of the aluminum.

In the manufacturing process of the vacuum chamber, especially of an object that is intended to make up the wall of the vacuum chamber, preferably the surface of the layer of aluminum may be partially treated with plasma electrolytic oxidation (PEO) to provide the second layer of the ceramic material. With said treatment, the object is provided, wherein the object comprises a carbon fiber reinforced thermoset coated with a ceramic material bound to aluminum. For ensuring an excellent adhesion between the layer of carbon fiber reinforced thermoset and the second layer of the ceramic material, the layer of aluminum of the object may be further treated by machining, grinding, anodization, plasma spray coating, flame spray coating, electric-arc spray coating, cold spray coating and/or plasma electrolytic oxidation.

The interior space of the vacuum chamber of the instrument may be configured to contain at least one item, for example in a manufacturing process of the item, wherein further components may be used in combination with the instrument to subject the item to one or more types of operation. In a practical example, an operation to be performed on an item positioned inside the vacuum chamber is particle cleaning. In such a case, a vacuum pressure prevailing inside the vacuum chamber may typically be in a range of about 10⁻¹ mbar (10 Pa) to 10⁻⁹ mbar (10⁻⁷ Pa), depending on whether or not a purge gas is used. During the actual particle cleaning, the vacuum pressure in the vacuum chamber may be above 10⁻⁹ mbar (10⁻⁷ Pa), preferably between 10⁻³ mbar (10⁻¹ Pa) and 10⁻⁸ mbar (10⁻⁶ Pa).

The instrument according to the invention may particularly be an analytical instrument configured to perform an analysis of a sample, comprising:
- an ion source that is configured to create ions in the sample,
- electrodes which are configured to separate ions from the sample and to thereby provide separated ions,
- a detector that is configured to detect the separated ions,

wherein the ion source, the electrodes, and the detector are positioned in the interior space of the vacuum chamber, and
wherein the mechanism for depressurizing fluid in the interior space of the vacuum chamber comprises a vacuum pump in fluid communication with the interior space of the vacuum chamber.

In an embodiment, the analytical instrument is a mass spectrometer in which the vacuum chamber comprises a tube and at least four flanges which are attached to the tube, and in which the vacuum pump is arranged at a first flange of the vacuum chamber. The mass spectrometer further comprises:
- a pressure gauge that is arranged at a second flange of the vacuum chamber and configured to regulate fluid pressure in the vacuum chamber,
- an inlet that is arranged at a third flange of the vacuum chamber and configured to receive the sample to the interior space, and
- an electronic control unit that is arranged at a fourth flange of the vacuum chamber, wherein the detector is positioned most to the electronic control unit in the interior space.

In an embodiment of the instrument, the instrument is of a portable nature by having a weight of 20 kg or less.

Unlike vacuum chambers made of metal, the coefficient of linear expansion of a vacuum chamber included in the instrument according to the invention can be reduced to nearly zero. In that way, the vacuum chamber is nondeformable even when a temperature adjustment and control system is not used. Also, because of its light weight and high Young's module, any deflection in the vacuum chamber may be prevented.

Because of high vibration-damping property of the layer of carbon fiber reinforced thermoset, the vacuum chamber is not affected by external vibrations even when it is held perpendicularly and supported as a cantilever. Further, because of the high moldability of the layer of carbon fiber reinforced thermoset, the layer of carbon fiber reinforced thermoset can be formed into pipes of any diameter. Still further, by providing the layer of aluminum between the first and second layer of the ceramic material on top of the layer of carbon fiber reinforced thermoset, the same functionalities as a metal vacuum chamber are obtained while providing an out-gas suppression effect in the vacuum environment that uses a vacuum pump at a slow evacuation rate. In that way, even when high voltage is applied to the tube of the vacuum chamber, a prevention of vacuum discharge is ensured.

The instrument of the invention may be used in various applications, especially for applications involving the use of a vacuum chamber while at the same time requiring a light and wear resistant material (applications involving e.g. Particle Beamlines, electron microscopy vacuum chambers, semiconductor industry vacuum chambers).

### BRIEF DESCRIPTION OF THE DRAWINGS

Further features and advantages of the invention will become apparent from the description of the invention by way of exemplary and non-limiting embodiments of an instrument that comprises a vacuum chamber and a mechanism for depressurizing fluid in an interior space of the vacuum chamber.

The person skilled in the art will appreciate that the described embodiments of the instrument according to the present invention are exemplary in nature only and not to be construed as limiting the scope of protection in any way. The person skilled in the art will realize that alternatives and equivalent embodiments of the instrument can be conceived and reduced to practice without departing from the scope of protection of the present invention.

Reference will be made to the figures on the accompanying drawing sheets. The figures are schematic in nature and therefore not necessarily drawn to scale. Further, equal reference numerals denote equal or similar parts. On the attached drawing sheets,
Figure 1 illustrates an analytical instrument comprising a vacuum chamber;
Figure 2 illustrates a tube of the vacuum chamber and four flanges which are attached to the tube; and
Figure 3 illustrates a cross-section of the tube of the vacuum chamber.

### DETAILED DESCRIPTION OF EMBODIMENTS

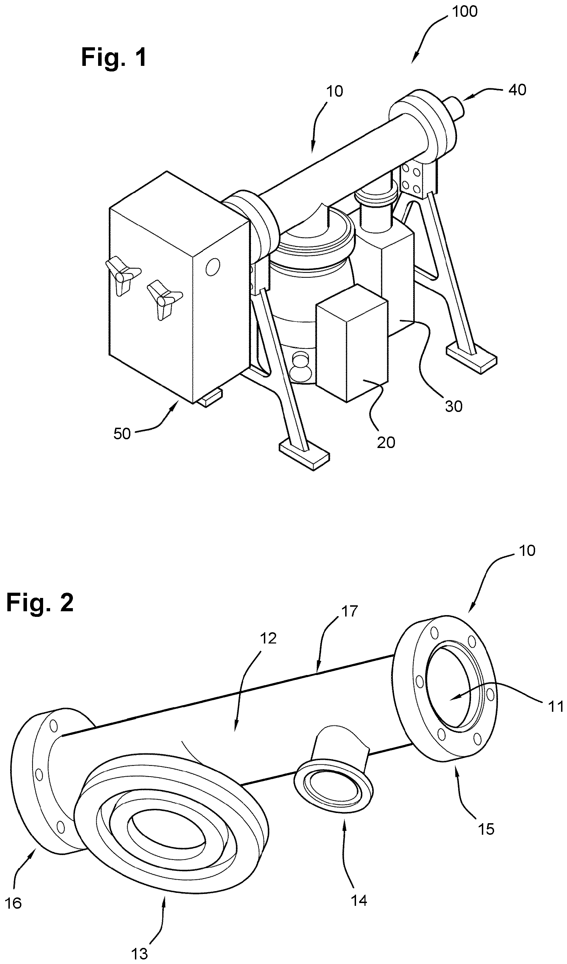

Figure 1 illustrates an analytical instrument 100 that is configured to perform an analysis of a sample. The analytical instrument 100 comprises a vacuum chamber 10 and a mechanism 20 for depressurizing fluid within the vacuum chamber 10.

For example, as shown in Figure 1, the analytical instrument 100 may be a mass spectrometer that comprises the vacuum chamber 10 as mentioned, a vacuum pump 20, a pressure gauge 30, an inlet 40, and an electronic control unit 50. In view thereof, in the following, the analytical instrument 100 will be referred to as mass spectrometer 100.

The mass spectrometer 100 may further comprise an ion source configured to create ions in the sample, electrodes which are configured to separate ions from the sample and to thereby provide separated ions, and a detector that is configured to detect the separated ions. The ion source, the electrodes, and the detector may be positioned in an interior space 11 of the vacuum chamber 10. The detector may be positioned most to the electronic control unit 50 in the interior space 11.

Figure 2 illustrates the vacuum chamber 10. In the shown example, the vacuum chamber 10 comprises a tube 12 and four flanges 13, 14, 15, and 16 which are attached to the tube 12. In this configuration, the vacuum pump 20 may be arranged at a first flange 13 of the vacuum chamber 10, the pressure gauge 30 may be arranged at a second flange 14 of the vacuum chamber 10 and configured to regulate fluid pressure in the vacuum chamber 10, the inlet 40 may be arranged at a third flange 15 of the vacuum chamber 10 and configured to receive the sample to the interior space 11, and the electronic control unit 50 may be arranged at a fourth flange 16 of the vacuum chamber 10.

In practical applications, a wall 17 of the vacuum chamber 10 may be subjected to pressure following from the pressure of the depressurized fluid in the interior space 11 of the vacuum chamber 10 being set by means of the vacuum pump 20 to a pressure in a range of 10⁻¹ mbar (10 Pa) and 10⁻⁹ mbar (10⁻⁷ Pa). Unlike vacuum chambers made of metal, the coefficient of linear expansion of the vacuum chamber 10 may be reduced to nearly zero. In that way, the vacuum chamber 10 is practically nondeformable even without use of a temperature adjustment and control system.

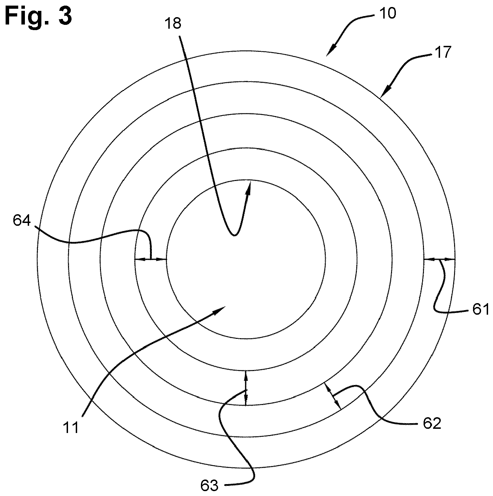

Figure 3 illustrates the structure of the wall 17 of the vacuum chamber 10 at the position of the tube 12. The wall 17 of the vacuum chamber 10 includes a layer of carbon fiber reinforced thermoset 61, a first layer of ceramic material 62, a layer of aluminum 63, and a second layer of ceramic material 64. The second layer of the ceramic material 64 is positioned at the side of an interior surface 18 of the wall 17 of the vacuum chamber 10.

The layer of carbon fiber reinforced thermoset 61 has a thickness in a range of 1-10 mm. Consequently, the layer of carbon fiber reinforced thermoset 61 is strong enough to resist a broad range of impacts. In terms of mechanical strength related to bending strength, the Young's modulus of the carbon fiber reinforced thermoset material is approximately 1.4-fold of that of stainless steel. Additionally, the carbon fiber reinforced thermoset material provides high vibration damping properties as compared to metals.

Further, the first layer of the ceramic material 62 has a thickness in a range of 40-60 µm, and the second layer of the ceramic material 64 has a thickness in a range of 40-60 µm as well. As shown in Figure 3, the first layer of the ceramic material 62 is arranged between the layer of carbon fiber reinforced thermoset 61 and the layer of aluminum 63. The first layer of the ceramic material 62 may provide an adhesive bound between the layer of carbon fiber reinforced thermoset 61 and the layer of aluminum 63.

The layer of aluminum 63 has a thickness in a range of 0.5-10 mm. The layer of the carbon fiber reinforced thermoset 61 may be bound on the layer of aluminum 63 on which the first layer of ceramic material 62 is bound. During a manufacturing process of the vacuum chamber 10, especially of an object that is intended to make up the wall 17 of the vacuum chamber 10, the first layer of the ceramic material 62 may be bound with the layer of carbon fiber reinforced thermoset 61 and the layer of aluminum 63 under moderate temperatures. This may result in a very strong bonding to aluminum and/or carbon fiber without destroying the thermoset resin in the layer of carbon fiber reinforced thermoset 61.

During operation of the mass spectrometer 100, a high voltage of ± several kV is applied in the interior space 11 of the vacuum chamber 10. As the second layer of the ceramic material 64 is arranged on the layer of aluminum 63 and is positioned most to the interior surface 18 of the wall 17 of the vacuum chamber 10, the second layer of the ceramic layer 64 may allow the layer aluminum 63 to be durable in the context of an environment which is depressurized, and in which high voltage is applied. Also, the second layer of the ceramic material 64 may have a function as an electrical insulator which provides high wear resistance to the wall 17 of the vacuum chamber 10.

Because of high vibration-damping property of the layer of carbon fiber reinforced thermoset 61, it may be achieved that the vacuum chamber 10 is not affected by external vibrations even when it is held perpendicularly and supported as a cantilever. Further, because of the high moldability of the layer of carbon fiber reinforced thermoset 61, the layer of carbon fiber reinforced thermoset 61 can be formed into pipes of any diameter. Still further, by providing the layer of aluminum 63 between the first and second layer of the ceramic material 62, 64 on top of the layer of carbon fiber reinforced thermoset 61, the same functionalities as a metal vacuum chamber are obtained while providing an out-gas suppression effect in the vacuum environment that uses the vacuum pump 20 at a slow evacuation rate. In that way, even when high voltage is applied to the interior space 11 of the vacuum chamber 10, prevention of vacuum discharge is ensured.

The present invention can be summarized as relating to an instrument 100 that comprises a vacuum chamber 10, wherein a wall 17 of the vacuum chamber 10 includes a layer of carbon fiber reinforced thermoset 61 having a thickness in a range of 1-10 mm, a first and a second layer of ceramic material 62, 64 having a thickness in a range of 40-60 µm, and a layer of aluminum 63 having a thickness in a range of 0.5-10 mm. The first layer of ceramic material 62 is positioned between the layer of carbon fiber reinforced thermoset 61 and the layer of aluminum 63. The layer of aluminum 63 is positioned between the first layer of ceramic material 62 and the second layer of ceramic material 64. The second layer of ceramic material 64 is positioned most to a side of an interior surface 18 of the wall 17 of the vacuum chamber 10.

It will be clear to a person skilled in the art that the vacuum chamber 10 of Figure 2 does not necessarily need to be provided with one tube 12 and four flanges 13, 14, 15, 16. The number of the tube 12 and the flanges 13, 14, 15, 16 could be any number that is suitable for a given application of the vacuum chamber 10. For example, the vacuum chamber 10 may comprise one tube 12 with five flanges or two tubes 12 with two flanges on each tube 12.

It will be also clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

### LIST of REFERENCE NUMERALS

- 100: Instrument
- 10: Vacuum chamber
- 11: Interior space of the vacuum chamber
- 12: Tube of the vacuum chamber
- 13, 14, 15, 16: Flanges of the vacuum chamber
- 17: Wall of the vacuum chamber
- 18: Interior surface of the wall of the vacuum chamber
- 20: Vacuum pump
- 30: Pressure gauge
- 40: Inlet
- 50: Electronic Control Unit
- 61: Layer of carbon fiber reinforced thermoplastic
- 62: First layer of ceramic material
- 63: Layer of Aluminum
- 64: Second layer of ceramic material

## Claims

1. An instrument (100), comprising:
- a vacuum chamber (10) comprising an interior space (11) for containing depressurized fluid, and
- a mechanism (20) for depressurizing fluid in the interior space (11) of the vacuum chamber (10),
wherein a wall (17) of the vacuum chamber (10) delimiting at least a portion of the interior space (11) includes:
- a layer of carbon fiber reinforced thermoset (61) having a thickness in a range of 1-10 mm,
- a first layer of ceramic material (62) having a thickness in a range of 40-60 µm,
- a layer of aluminum (63) having a thickness in a range of 0.5-10 mm, and
- a second layer of ceramic material (64) having a thickness in a range of 40-60 µm, wherein the first layer of ceramic material (62) is positioned between the layer of carbon fiber reinforced thermoset (61) and the layer of aluminum (63), wherein the layer of aluminum (63) is positioned between the first layer of ceramic material (62) and the second layer of ceramic material (64), and wherein the second layer of ceramic material (64) is positioned most to a side of an interior surface (18) of the wall (17) of the vacuum chamber (10).

2. The instrument (100) according to claim 1, wherein the mechanism (20) for depressurizing the fluid is configured to reduce the pressure of the fluid in the interior space (11) of the vacuum chamber (10) to a pressure in a range of 10⁻¹ mbar (10 Pa) and 10⁻⁹ mbar (10⁻⁷ Pa).

3. The instrument (100) according to claim 1 or 2, wherein the mechanism (20) for depressurizing the fluid is configured to reduce the pressure of the fluid in the interior space (11) of the vacuum chamber (10) to a pressure in a range of 10⁻³ mbar (10⁻¹ Pa) and 10⁻⁸ mbar (10⁻⁶ Pa).

4. The instrument (100) according to any of claims 1-3, being configured to perform an analysis of a sample and comprising:
- an ion source that is configured to create ions in the sample,
- electrodes which are configured to separate ions from the sample and to thereby provide separated ions,
- a detector that is configured to detect the separated ions,
wherein the ion source, the electrodes, and the detector are positioned in the interior space (11) of the vacuum chamber (10), and
wherein the mechanism (20) for depressurizing fluid in the interior space (11) of the vacuum chamber (10) comprises a vacuum pump (20) in fluid communication with the interior space (11) of the vacuum chamber (10).

5. The instrument (100) according to claim 4, being a mass spectrometer in which the vacuum chamber (10) comprises a tube (12) and at least four flanges (13, 14, 15, 16) which are attached to the tube (12), and in which the vacuum pump (20) is arranged at a first flange (13) of the vacuum chamber (10), the mass spectrometer further comprising:
- a pressure gauge (30) that is arranged at a second flange (14) of the vacuum chamber (10) and configured to regulate fluid pressure in the vacuum chamber (10),
- an inlet (40) that is arranged at a third flange (15) of the vacuum chamber (10) and configured to receive the sample to the interior space (11), and
- an electronic control unit (50) that is arranged at a fourth flange (16) of the vacuum chamber (10), wherein the detector is positioned most to the electronic control unit (50) in the interior space (11).

6. The instrument (100) according to any of claims 1-5, wherein, in the wall (17) of the vacuum chamber (10), the layer of carbon fiber reinforced thermoset (61) is bound to the first layer of ceramic material (62), and the layer of aluminum (63) is bound to the first layer of ceramic material (62) and the second layer of ceramic material (64).

7. The instrument (100) according to any of claims 1-6, wherein, in the wall (17) of the vacuum chamber (10), the layer of carbon fiber reinforced thermoset (61) has a thickness in a range of 1-2 mm.

8. The instrument (100) according to any of claims 1-7, wherein, in the wall (17) of the vacuum chamber (10), the layer of aluminum (63) has a thickness in a range of 0.5-3 mm.

9. The instrument (100) according to any of claims 1-8, wherein, in the wall (17) of the vacuum chamber (10), the layer of aluminum (63) has a thickness in a range of 1-2 mm.

10. The instrument (100) according to any of claims 1-9, wherein, in the wall (17) of the vacuum chamber (10), the ceramic material of the second layer of ceramic material (64) has a hardness according to Vickers (HV) of at least 750.

11. The instrument (100) according to any of claims 1-10, wherein, at the side of the wall (17) of the vacuum chamber (10) other than the side where the layer of aluminum (63) is present, the second layer of ceramic material (64) is covered by a coating, and wherein the coating is selected from a group that includes a Teflon^{®} coating, gold coating, copper, titanium and a diamond-like-carbon (DLC) coating.

12. The instrument (100) according to any of claims 1-11, being of a portable nature by having a weight of 20 kg or less.

## Patentansprüche

1. Instrument (100), umfassend:
- eine Vakuumkammer (10), umfassend einen Innenraum (11) zum Enthalten von drucklosem Fluid, und
- einen Mechanismus (20) zum Druckmindern von Fluid in dem Innenraum (11) der Vakuumkammer (10),
wobei eine Wand (17) der Vakuumkammer (10), die mindestens einen Abschnitt des Innenraums (11) begrenzt, einschließt:
- eine Schicht aus kohlenstofffaserverstärktem Duroplast (61), die eine Dicke in einem Bereich von 1-10 mm aufweist,
- eine erste Schicht aus Keramikmaterial (62), die eine Dicke in einem Bereich von 40-60 µm aufweist,
- eine Schicht aus Aluminium (63), die eine Dicke in einem Bereich von 0,5-10 mm aufweist, und
- eine zweite Schicht aus Keramikmaterial (64), die eine Dicke in einem Bereich von 40-60 µm aufweist, wobei die erste Schicht aus Keramikmaterial (62) zwischen der Schicht aus kohlenstofffaserverstärktem Duroplast (61) und der Schicht aus Aluminium (63) positioniert ist, wobei die Schicht aus Aluminium (63) zwischen der ersten Schicht aus Keramikmaterial (62) und der zweiten Schicht aus Keramikmaterial (64) positioniert ist, und wobei die zweite Schicht aus Keramikmaterial (64) am meisten an einer Seite einer Innenoberfläche (18) der Wand (17) der Vakuumkammer (10) positioniert ist.

2. Instrument (100) nach Anspruch 1, wobei der Mechanismus (20) zum Druckmindern des Fluids konfiguriert ist, um den Druck des Fluids in dem Innenraum (11) der Vakuumkammer (10) auf einen Druck in einem Bereich von 10⁻¹ mbar (10 Pa) und 10⁻⁹ mbar (10⁻⁷ Pa) zu reduzieren.

3. Instrument (100) nach Anspruch 1 oder 2, wobei der Mechanismus (20) zum Druckmindern des Fluids konfiguriert ist, um den Druck des Fluids in dem Innenraum (11) der Vakuumkammer (10) auf einen Druck in einem Bereich von 10⁻³ mbar (10⁻¹ Pa) und 10⁻⁸ mbar (10⁻⁶ Pa) zu reduzieren.

4. Instrument (100) nach einem der Ansprüche 1 bis 3, das konfiguriert ist, um eine Analyse einer Probe durchzuführen und umfassend:
- eine lonenquelle, die konfiguriert ist, um Ionen in der Probe zu erzeugen,
- Elektroden, die konfiguriert sind, um Ionen von der Probe zu trennen und dadurch getrennte Ionen bereitzustellen,
- einen Detektor, der konfiguriert ist, um die getrennten Ionen zu erfassen,
wobei die lonenquelle, die Elektroden und der Detektor in dem Innenraum (11) der Vakuumkammer (10) positioniert sind, und
wobei der Mechanismus (20) zum Druckmindern von Fluid in dem Innenraum (11) der Vakuumkammer (10) eine Vakuumpumpe (20) in Fluidverbindung mit dem Innenraum (11) der Vakuumkammer (10) umfasst.

5. Instrument (100) nach Anspruch 4, das ein Massenspektrometer ist, in dem die Vakuumkammer (10) ein Rohr (12) und mindestens vier Flansche (13, 14, 15, 16) umfasst, die an dem Rohr (12) angebracht sind, und wobei die Vakuumpumpe (20) an einem ersten Flansch (13) der Vakuumkammer (10) angeordnet ist, das Massenspektrometer ferner umfassend:
- einen Druckmesser (30), der an einem zweiten Flansch (14) der Vakuumkammer (10) angeordnet und konfiguriert ist, um einen Fluiddruck in der Vakuumkammer (10) zu regulieren,
- einen Einlass (40), der an einem dritten Flansch (15) der Vakuumkammer (10) angeordnet und konfiguriert ist, um die Probe in den Innenraum (11) aufzunehmen, und
- eine elektronische Steuereinheit (50), die an einem vierten Flansch (16) der Vakuumkammer (10) angeordnet ist, wobei der Detektor am meisten an der elektronischen Steuereinheit (50) in dem Innenraum (11) positioniert ist.

6. Instrument (100) nach einem der Ansprüche 1 bis 5, wobei, in der Wand (17) der Vakuumkammer (10), die Schicht aus kohlenstofffaserverstärktem Duroplast (61) an die erste Schicht aus Keramikmaterial (62) gebunden ist und die Schicht aus Aluminium (63) an die erste Schicht aus Keramikmaterial (62) und die zweite Schicht aus Keramikmaterial (64) gebunden ist.

7. Instrument (100) nach einem der Ansprüche 1 bis 6, wobei, in der Wand (17) der Vakuumkammer (10), die Schicht aus kohlenstofffaserverstärktem Duroplast (61) eine Dicke in einem Bereich von 1-2 mm aufweist.

8. Instrument (100) nach einem der Ansprüche 1 bis 7, wobei, in der Wand (17) der Vakuumkammer (10), die Schicht aus Aluminium (63) eine Dicke in einem Bereich von 0,5-3 mm aufweist.

9. Instrument (100) nach einem der Ansprüche 1 bis 8, wobei, in der Wand (17) der Vakuumkammer (10), die Schicht aus Aluminium (63) eine Dicke in einem Bereich von 1-2 mm aufweist.

10. Instrument (100) nach einem der Ansprüche 1 bis 9, wobei, in der Wand (17) der Vakuumkammer (10), das Keramikmaterial der zweiten Schicht aus Keramikmaterial (64) eine Härte gemäß Vickers (HV) von mindestens 750 aufweist.

11. Instrument (100) nach einem der Ansprüche 1 bis 10, wobei, an der Seite der Wand (17) der Vakuumkammer (10), die nicht die Seite ist, an der die Schicht aus Aluminium (63) vorhanden ist, die zweite Schicht aus Keramikmaterial (64) durch eine Beschichtung bedeckt ist, und wobei die Beschichtung aus einer Gruppe ausgewählt ist, die eine Teflon^{®}-Beschichtung, Goldbeschichtung, Kupfer, Titan und eine diamantartige Kohlenstoffbeschichtung (DLC-Beschichtung) einschließt.

12. Instrument (100) nach einem der Ansprüche 1 bis 11, das von transportierbarer Natur ist, indem es ein Gewicht von 20 kg oder weniger aufweist.

## Revendications

1. Instrument (100), comprenant
- une chambre à vide (10) comprenant un espace intérieur (11) pour contenir un fluide dépressurisé, et
- un mécanisme (20) de dépressurisation de fluide dans l'espace intérieur (11) de la chambre à vide (10),
dans lequel une paroi (17) de la chambre à vide (10) délimitant au moins une partie de l'espace intérieur (11) comporte :
- une couche d'une matière thermodurcie renforcée par fibres de carbone (61) ayant une épaisseur dans une plage comprise entre 1 et 10 mm,
- une première couche de matériau céramique (62) ayant une épaisseur dans une plage comprise entre 40 et 60 µm,
- une couche d'aluminium (63) ayant une épaisseur dans une plage comprise entre 0,5 et 10 mm, et
- une seconde couche de matériau céramique (64) ayant une épaisseur dans une plage comprise entre 40 et 60 µm, dans lequel la première couche de matériau céramique (62) est positionnée entre la couche de matière thermodurcie renforcée par fibres de carbone (61) et la couche d'aluminium (63), dans lequel la couche d'aluminium (63) est positionnée entre la première couche de matériau céramique (62) et la seconde couche de matériau céramique (64), et dans lequel la seconde couche de matériau céramique (64) est positionnée le plus à côté d'une surface intérieure (18) de la paroi (17) de la chambre à vide (10).

2. Instrument (100) selon la revendication 1, dans lequel le mécanisme (20) de dépressurisation du fluide est conçu pour réduire la pression du fluide dans l'espace intérieur (11) de la chambre à vide (10) à une pression dans une plage comprise entre 10 ⁻¹ mbar (10 Pa) et 10⁻⁹ mbar (10⁻⁷ Pa).

3. Instrument (100) selon la revendication 1 ou 2, dans lequel le mécanisme (20) de dépressurisation du fluide est conçu pour réduire la pression du fluide dans l'espace intérieur (11) de la chambre à vide (10) à une pression dans une plage comprise entre 10⁻³ mbar (10⁻¹ Pa) et 10⁻⁸ mbar (10⁻⁶ Pa).

4. Instrument (100) selon l'une quelconque des revendications 1 à 3, étant configuré pour effectuer une analyse d'un échantillon et comprenant :
- une source d'ions qui est configurée pour créer des ions dans l'échantillon,
- des électrodes qui sont configurées pour séparer des ions de l'échantillon et pour fournir de ce fait des ions séparés,
- un détecteur qui est configuré pour détecter les ions séparés,
dans lequel la source d'ions, les électrodes et le détecteur sont positionnés dans l'espace intérieur (11) de la chambre à vide (10), et
dans lequel le mécanisme (20) de dépressurisation du fluide dans l'espace intérieur (11) de la chambre à vide (10) comprend une pompe à vide (20) en communication fluidique avec l'espace intérieur (11) de la chambre à vide (10).

5. Instrument (100) selon la revendication 4, étant un spectromètre de masse dans lequel la chambre à vide (10) comprend un tube (12) et au moins quatre brides (13,14, 15, 16) qui sont fixées au tube (12), et dans lequel la pompe à vide (20) est agencée au niveau d'une première bride (13) de la chambre à vide (10), le spectromètre de masse comprenant en outre :
- un manomètre (30) qui est agencé au niveau d'une deuxième bride (14) de la chambre à vide (10) et conçu pour réguler la pression de fluide dans la chambre à vide (10),
- une entrée (40) qui est agencée au niveau d'une troisième bride (15) de la chambre à vide (10) et conçue pour recevoir l'échantillon vers l'espace intérieur (11), et
- une unité de commande électronique (50) qui est agencée au niveau d'une quatrième bride (16) de la chambre à vide (10), dans lequel le détecteur est positionné le plus à côté de l'unité de commande électronique (50) dans l'espace intérieur (11).

6. Instrument (100) selon l'une quelconque des revendications 1 à 5, dans lequel, dans la paroi (17) de la chambre à vide (10), la couche de matière thermodurcie renforcée par des fibres de carbone (61) est liée à la première couche de matériau céramique (62), et la couche d'aluminium (63) est liée à la première couche de matériau céramique (62) et à la seconde couche de matériau céramique (64).

7. Instrument (100) selon l'une quelconque des revendications 1 à 6, dans lequel, dans la paroi (17) de la chambre à vide (10), la couche de matière thermodurcie renforcée par des fibres de carbone (61) a une épaisseur dans une plage comprise entre 1 et 2 mm.

8. Instrument (100) selon l'une quelconque des revendications 1 à 7, dans lequel, dans la paroi 17) de la chambre à vide (10), la couche d'aluminium (63) a une épaisseur dans une plage comprise entre 0,5 et 3 mm.

9. Instrument (100) selon l'une quelconque des revendications 1 à 8, dans lequel, dans la paroi (17) de la chambre à vide (10), la couche d'aluminium (63) a une épaisseur dans une plage comprise entre 1 et 2 mm.

10. Instrument (100) selon l'une quelconque des revendications 1 à 9, dans lequel, dans la paroi (17) de la chambre à vide (10), le matériau céramique de la seconde couche de matériau céramique (64) a une dureté selon Vickers (HV) d'au moins 750.

11. Instrument (100) selon l'une quelconque des revendications 1 à 10, dans lequel, au niveau du côté de la paroi (17) de la chambre à vide (10), autre que le côté où la couche d'aluminium (63) est présente, la seconde couche de matériau céramique (64) est recouverte par un revêtement, et dans lequel le revêtement est choisi dans un groupe qui comporte un revêtement en Téflon^{®}, un revêtement en or, du cuivre, du titane et un revêtement en carbone de type diamant (DLC).

12. Instrument (100) selon l'une quelconque des revendications 1 à 11, étant de type portable, son poids étant inférieur ou égal à 20 kg.
